# EUROPÄISCHE PATENTANMELDUNG

(11) **EP 0 922 731 A1**
(43) Veröffentlichungstag der Anmeldung: **16.06.1999**
(21) Anmeldenummer: 98122680.6
(22) Anmeldetag: 28.11.1998
(51) Int. Cl.: C08L 77/00, C08L 77/06, C08L 77/02

(54) **Mischungen aus Polyamid mit Polyesteramiden**

(30) Priorität: 11.12.1997 DE 19755106
(71) Anmelder: WOLFF WALSRODE AKTIENGESELLSCHAFT, D-29699 Walsrode (DE)
(72) Erfinder: Kaschel, Gregor Dr., 29699 Bomlitz (DE); Weber, Gunter Dr., 29683 Fallingbostel (DE); Tamke, Heiko, 29699 Bomlitz (DE); Kleemiss, Michael Dr., 30900 Wedemark (DE)
(74) Vertreter: Feldhues, Michael L.F., Dr.

(57) **Zusammenfassung**

Die vorliegende Erfindung betrifft Mischungen aus Polyamid und Polyesteramiden.

## Beschreibung

Die vorliegende Erfindung betrifft Mischungen aus Polyamid und Polyesteramiden.

Polyamid wird in vielfältiger Weise eingesetzt. Häufig besteht der Wunsch, das Polyamid in seinen optischen und mechanischen Eigenschaften zu verbessern. Dies ist insbesondere dann schwierig, wenn gleichzeitig die Knickbruchbeständigkeit des Polyamides verbessert werden soll. Eine Möglichkeit zur Modifizierung von Polymeren ist die Verwendung von Blends bzw. Mischungen. Hier hat sich überraschender Weise die Mischung bestehend aus Polyamid mit Polyesteramid als besonders geeignet erwiesen.

Den Stand der Technik betreffend Polymere beschreibt unter anderem *Domininghaus* (Hans Dominighaus: Die Kunststoffe und ihre Eigenschaften, VDI-Verlag 1992, Düsseldorf). Einen weiteren Überblick bezüglich Polymere, Herstellverfahren und Verpackungen geben *The Wiley Encyclopedia of Packaging Technology* (Hrg. M. Bakker, D. Eckroth; John Wiley & Sons, 1986) und speziell für Kunststoff-Folien *Nentwig* (Joachim Nentwig: Kunststoff-Folien, Carl Hanser Verlag 1994, München).

Folien enthaltend Polyamid sind in der Lebensmittelverpackung üblich. Gerade hier werden hohe Anforderungen an die optischen Eigenschaften, den Produktschutz und an die Maschinengängigkeit einer Folie gestellt. Gewünscht werden Folien mit geringer Trübung und hohem Glanz. Die Verpackung soll das Lebensmittel vor vorzeitigem Verderb schützen, daher muß die Verpackung das Produkt über die gesamte Lebenszeit hermetisch abschließen. Die Bildung von Löchern, wie sie z.B. beim Transport an stark beanspruchten Stellen auftreten können, muß verhindert werden. Ein Maß für die Neigung einer Verpackung zur Lochbildung ist die Knickbruchfestigkeit.

Es stellt sich daher die Aufgabe, Polyamid so zu modifizieren, daß die Transparenz und der Glanz erhöht und die Knickbruchbeständigkeit verbessert werden. Insbesondere bei der Verwendung des Polyamides in Folien sollte die Maschinengängigkeit, und hier insbesondere das Tiefziehverhalten, verbessert werden.

Erfindungsgemäß gelang dies durch eine Mischung (Abkürzung 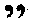 M"), die dadurch gekennzeichnet ist, daß sie 50 bis 99 Gew.-% Polyamid (Abkürzung 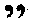 PA") und 1 bis 50 Gew.-% Polyesteramid (Abkürzung 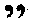 PESTA") enthält.

Die erfindungsgemäße Mischung läßt sich auf allen Extrusionseinrichtungen, auf denen Polyamid oder Polyolefine verarbeitbar sind, extrudieren. Den Stand der Technik zum Thema Extrusion und Extrusionsanlagen gibt das Handbuch der Kunststoff-Extrusionstechnik, Band 1+2, Hrg. Hensen, Knappe und Potente, Carl Hanser Verlag 1989. Insbesondere lassen sich aus der erfindungsgemäßen Mischung Halbzeuge wie z.B. Profile, Blasformartikel und Folien herstellen.

Die erfindungsgemäße Mischung kann ein oder mehrere Polyamide enthalten. Die Polyamide können durch Additive modifiziert sein. Als Additive werden z.B. Kristallisationsmittel, Gleitmittel, und Verarbeitungshilfsmittel betrachtet.

Die erfindungsgemäße Mischung kann nach den bekannten Verfahren (Wasserdampf, Ethylenoxid) sterilisiert werden.

Gegenstand der Erfindung ist darüber hinaus ein Verfahren zur Verstreckung einer Folie aus der erfindungsgemäßen Mischung. Die Folie kann sowohl mono- als auch biaxial verstreckt sein. Die biaxiale Verstreckung kann im Simultanreckverfahren oder im zweistufigen sequentiellen Verfahren, wobei sowohl zuerst längs- und dann quergereckt als auch zuerst quer- und dann längsgereckt werden kann, oder im dreistufigen sequentiellen Verfahren, wobei sowohl zuerst längs-, dann quer- und abschließend längsgereckt als auch zuerst quer-, dann längs- und abschließend quergereckt werden kann, oder im vierstufigen sequentiellen Verfahren, wobei sowohl zuerst längs-, dann quer-, dann längs- und abschließend quergereckt als auch zuerst quer, dann längs-, dann quer- und abschließend längsgereckt werden kann, erfolgen.

An jede einzelne Verstreckung kann sich eventuell eine Thermofixierung (Temperung) des Films anschließen. Die einzelne Verstreckung jeweils in Längs- und Querrichtung kann dabei ein- oder mehrstufig erfolgen. Eine Temperung ist dann sinnvoll, wenn das Schrumpfen des verstreckten Filmes bei Gebrauchstemperaturen in der Nähe der Recktemperaturen vermieden werden soll.

In einer bevorzugten Form der erfindungsgemäßen Folie ist die biaxiale Verstreckung dadurch gekennzeichnet, daß es sich um ein sequentielles Verfahren handelt, das mit der Längsreckung beginnt. Das Reckverhältnis beträgt in Längsrichtung 1:1,5 bis 1:10 und in Querrichtung 1:2 bis 1:20.

Verstreckte oder auch unverstreckte Folien, die die erfindungsgemäße Mischung enthalten, können mit Kaschierfolien bestehend aus einem oder mehreren anderen Polymeren kombiniert werden. Dies kann z.B. durch die Klebstoffkaschierung oder Extrusionskaschierung erfolgen. Die Kaschierfolien können ein- oder mehrschichtig sein, wobei jede Schicht aus einem oder mehreren Polymeren bestehen kann.

Verstreckte oder auch unverstreckte Folien, die die erfindungsgemäße Mischung enthalten, können mit anderen Polymeren beschichtet werden. Zur Verbesserung der Haltung zwischen der Folie und den zu beschichteten Polymeren können Haftvermittler eingesetzt werden.

Verstreckte oder auch unverstreckte Folien, die die erfindungsgemäße Mischung enthalten, können mit einem Element oder den Oxiden des Elementes der ersten bis vierten Haupt- oder Nebengruppe des Periodensystems in einer Vakuumkammer bedampft werden. In bevorzugter Weise werden zur Bedampfung verstreckte Folien eingesetzt. Die Bedampfung verbessert in der Regel die Barriereeigenschaften der Folie.

Die erfindungsgemäße Mischung ist auch für die Coextrusion mit anderen Polymeren wie z.B. Polyolefine bzw. Polyolefincopolymeren (Abkürzung 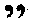 PO"), Ethylenvinylalkoholcopolymeren (Abkürzung 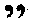 EVOH"), Polyamide, Polybuthylentherephthalat (Abkürzung 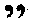 PBT") oder Polyethylentherephthalat (Abkürzung 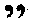 PET") geeignet. Zur Verbesserung der Verbundhaftung zwischen den unterschiedlichen Polymeren lassen sich coextrudierbare Haftvermittler (Abkürzung 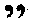 HV") einsetzten. Üblicherweise werden HV bestehend aus Polyolefinen, die häufig mit Einheiten aus Maleinsäure, Fumarsäure, Itaconsäure oder deren Säureanhydride, Säureester, Säureamide und Säureimide, oder Copolymerisaten von Ethylen mit Acrylsäure, Methacrylsäure, und/oder deren Metallsalzen und/oder deren Alkyl(C₁-C₄)ester oder entsprechenden Pfropfpolymeren eingesetzt.

Als PO werden Polyethylen niedriger Dichte (PE-LD), hoher Dichte (PE-HD), lineares Polyethylen geringer Dichte (PE-LLD), Polypropylen (PP), Polyisobutylen, Polybutylen und alle weiteren Polymere, die aus Olefinen hergestellt sind, bezeichnet. Desweiteren werden hier mit PO die Copolymerisate bestehend aus Olefinen und anderen Monomeren zusammengefasst. Dies sind z.B. Ethylen-Copolymerisate mit ungesättigten Estern (z.B. Vinylacetat), Ethylen-Copolymerisate mit ungesättigten Carbonsäuren bzw. ihren Salzen.

Aus den genannten Polymeren lassen sich z.B. folgende Folienstrukturen herstellen:

| | Schicht | | | | | | | | |
|---|---|---|---|---|---|---|---|---|---|
| Nr. | A | B | C | D | E | F | G | H | I |
| 1 | PO | HV | M | HV' | PO' | | | | |
| 2 | PO | HV | M | EVOH | M | HV' | PO' | | |
| 3 | M | HV | PO | HV | M | HV' | PO' | | |
| 4 | M | HV | PO | | | | | | |
| 5 | M | HV | PET | HV' | PO | | | | |
| 6 | PA | M | PA | HV | PO | | | | |
| 7 | PO | HV | M | HV | M | HV' | PO' | | |
| 8 | PO | HV | M | PA | M | HV' | PO' | | |
| 9 | PO | HV | M | PA | HV | M | HV' | PO' | |
| 10 | PO | HV | M | HV | PO' | HV | M | HV | PO |
| 11 | PA | M | PESTA | | | | | | |
| 12 | PO | HV | PA | M | PA | HV | PESTA | | |
| 13 | M | PESTA | | | | | | | |
| 14 | PESTA | PA | M | PA | PESTA' | | | | |
| 15 | PESTA | M | EVOH | M | PESTA' | | | | |
| 16 | PESTA | M | PA | EVOH | PA | M | PESTA' | | |
| 17 | PESTA | M | PA | EVOH | PA | M | HV | PO | |
| 18 | PESTA | M | PA | M | PESTA' | | | | |
| 19 | PESTA | M | PA | M | PESTA' | M | PA | M | PESTA |

Die angegebenen Folienaufbauten stellen nur eine Auswahl dar. Durch Hinzufügen oder Streichung von Schichten lassen sich weitere Folienaufbauten ableiten.

Der Index " ' " differenziert in einer Folienstruktur zwei Polymere gleicher Klassifizierung, die nicht identisch sind.

Folien enthaltend die erfindungsgemäße Mischung eignen sich insbesondere für Tiefziehanwendungen. Unter Tiefziehen wird die Verformung einer Folie oder Platte verstanden, die nach Erwärmung mittels einer Luftdruckdifferenz oder eines Kolbens in eine vorgeformte Mulde gedrückt wird. Während des Tiefziehvorganges nimmt entsprechend des Reckverhältnisses die Foliendicke ab. Hierbei zeichnet sich die erfindungsgemäße Mischung gegenüber PA durch eine stetigere Änderung der Foliendicke aus.

Folien enthaltend die erfindungsgemäße Mischung eignen sich auch aus einem anderen Grund für Tiefziehanwendungen. Verglichen mit PA kann durch die Zugabe von PESTA die Ziehtiefe und damit auch das Reckverhältnis erhöht werden.

Unter Polyamid (Abkürzung 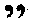 PA") versteht man im weitesten Sinne polymere Verbindungen, die durch die Säureamid-Gruppe R-NH-CO-R' miteinander verknüpft sind. Man unterscheidet zwei Gruppen von Polyamiden: Aufbau aus einem Grundstoff durch Polykondensation von ω-Aminocarbonsäuren oder Polymerisation ihrer Lactame zum Polyamid 6-Typ und solche, die aus zwei Grundstoffen: Diaminen und Dicarbonsäuren durch Polykondensation zum Polyamid 66-Typ, entstanden sind. Darüber hinaus sind noch Copolyamide üblich, die eine Kombination der genannten Polyamidtypen darstellen. Den Stand der Technik stellen folgende Bücher dar:
a) Kunststoff-Handbuch Band VI, Polyamide, Carl Hanser Verlag München 1966;
   und
b) Melvin I. Kohan: Nylon plastics handbook, Carl Hanser Verlag München 1995.

Unter dem Begriff Polyesteramid (Abkürzung 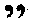 PESTA") versteht man aliphatische oder teilaromatische Polyesteramide, die aus folgenden Monomeren aufgebaut sein können:
I) aliphatischen bifunktionellen Alkoholen, bevorzugt linearen C₂ bis C₁₀-Dialkoholen wie beispielsweise Ethandiol, Butandiol, Hexandiol, besonders bevorzugt Butandiol, und/oder gegebenenfalls cycloaliphatischen bifunktionellen Alkoholen, vorzugsweise mit 5 bis 8 C-Atomen, wie beispielsweise Cyclohexandimethanol, und/oder teilweise oder vollständig statt der Diole monomere oder oligomere Polyole auf Basis Ethylenglykol, Propylenglykol, Tetrahydrofuran oder Copolymere daraus mit Molekulargewichten bis 4000, bevorzugt bis 1000, und/oder gegebenenfalls geringen Mengen verzweigten bifunktionellen Alkoholen, vorzugsweise C₃-C₁₂-Alkyldiolen, wie beispielsweise Neopentylglygol und zusätzlich gegebenenfalls geringen Mengen höhefunktionellen Alkoholen, vorzugsweise C₃-C₁₂-Alkylpolyole, wie beispielsweise 1,2,3-Propantriol, Trimethylolpropan sowie aus aliphatischen bifunktionellen Säuren, vorzugsweise mit 2 bis 12 C-Atomen in der Alkylkette, wie beispielsweise und bevorzugt Bernsteinsäure, Adipinsäure und/oder gegebenenfalls aromatischen bifunktionellen Säuren wie beispielsweise Terephthalsäure, Isophthalsäure, Naphthalindicarbonsäure und zusätzlich gegebenenfalls geringen Mengen höherfunktionellen Säuren wie beispielsweise Trimellitsäure oder
II) aus säure- und alkoholfunktionalisierten Bausteinen, vorzugsweise mit 2 bis 12 C-Atomen in der Kohlenstoffkette, beispielsweise Hydroxybuttersäure, Hydroxyvaleriansäure, Milchsäure, oder deren Derivaten, beispielsweise ε-Caprolacton oder Dilactid,
   oder einer Mischung und/oder einem Copolymer aus I) und II),
   wobei die aromatischen Säuren nicht mehr als 50 Gew.-% Anteil, bezogen auf alle Säuren, ausmachen,
III) einem Amidanteil aus aliphatischen und/oder cycloaliphatischen bifunktionellen und/oder gegebenenfalls geringen Mengen verzweigten bifunktionellen Aminen, bevorzugt sind lineare aliphatische C₂ bis C₁₀-Diamine, und zusätzlich gegebenenfalls geringen Mengen höherfunktionellen Aminen, unter den Aminen bevorzugt Hexamethylendiamin, Isophorondiamin und besonders bevorzugt Hexamethylendiamin, sowie aus linearen und/oder cycloaliphatischen bifunktionellen Säuren, vorzugsweise mit 2 bis 12 C-Atomen in der Alkylkette bzw. C₅- oder C₆-Ring im Falle von cycloaliphatischen Säuren, bevorzugt Adipinsäure, und/oder gegebenenfalls geringen Mengen verzweigten bifunktionellen und/oder gegebenenfalls aromatischen bifunktionellen Säuren wie beispielsweise Terephthalsäure, Isophthalsäure, Naphthalindicarbonsäure und zusätzlich gegebenenfalls geringen Mengen höherfunktionellen Säuren, vorzugsweise mit 2 bis 10 C-Atomen, oder
IV) aus einem Amidanteil aus säure- und aminfunktionalisierten Bausteinen, vorzugsweise mit 4 bis 20 C-Atomen in der cycloaliphatischen Kette, bevorzugt ω-Laurinlactam, ε-Caprolactam, besonders bevorzugt ε-Caprolactam,
   oder einer Mischung aus III) und IV) als Amidanteil, wobei
   der Esteranteil I) und/oder II) mindestens 5 Gew.-%, bezogen auf die Summe aus I), II), III) und IV) beträgt, vorzugsweise der Gewichtsanteil der Esterstrukturen 5 bis 70 Gew.-%, der Anteil der Amidstrukturen 95 bis 30 Gew.-% beträgt.

### Herstellung der Folien:

Alle Versuchsmuster sind auf einer Flachfolienanlage hergestellt worden. Die Massetemperatur der Schmelze beträgt ca. 260°C, die Gießwalze ist auf 100°C temperiert. Die Abzugsschwindigkeit beträgt 40 m/min, die Foliendicke 50 µm. Die Granulate wurden entsprechend ihres Mischungsverhältnisses abgewogen und in einem Trommelmischer gemischt und anschließend den Extrudern zudosiert. Das verwendete PA ist Durethan B 35 FKA (nukleiertes PA6, Viskositätszahl von ca. 185 nach ISO 1628-1 gemessen in H₂SO₄) der Fa. Bayer. Das verwendete PESTA ist BAK 1095 (60 Gew.-% Caprolactam und 40 Gew.-% zu gleichen Teilen 1,4-Butandiol und Adipinsäure; MFI (190°C/2,16 kg) ca. 5,5 g/10 min gemessen nach ISO 1133 Bedingung 4) der Fa. Bayer.

| Muster | Zusammensetzung | |
|---|---|---|
| | PA Gew.-% | PESTA Gew.-% |
| Vergleichsmuster 1 | 100 | 0 |
| Muster 2 | 95 | 5 |
| Muster 3 | 90 | 10 |
| Muster 4 | 80 | 20 |

### Meßverfahren

### Trübung

Die Messung erfolgt entsprechend der ASTM-Prüfnorm D 1003-61, Procedure A.

### Glanz

Als Glanz wird der regulär reflecktierte Lichtanteil, bezogen auf einen unter 20° zum Lot stehenden Lichtstrahl bezeichnet. Die Messung erfolgt analog der DIN 67 530.

### Knickbruch

Im Knickbruchtest (auch als Gelboflex-Test bekannt) wird ein 189 mm langer, zylindrisch zusammengerollter Probenzuschnitt auf 40 mm unter gleichzeitiger Drehung der einen Zylinderseite um 440° gestaucht. Das Erkennen von Knickbrüchen erfolgt mit einer Ammoniak-Diffusionsmethode, bei der eine Seite mit Ammoniaklösung benetzt wird und sich auf der anderen Seite ein Bogen Lichtpauspapier befindet, das neben seiner Lichtempfindlichkeit auch die Eigenschaft besitzt, sich schon bei geringen Mengen gasförmigen Ammoniaks blau-schwarz zu verfärben. Alle Folien werden vor ihrer Prüfung eine Woche bei 23°C und 50 % r.F. klimatisiert. Es werden jeweils 2 Muster geprüft, angegeben wird die Summe aller Löcher gemessen in beiden Proben. Die Anzahl der Hübe betrug 500.

### Tiefziehversuche

Auf einer horizontalen Tiefziehmaschine (Tiromat 3000 der Fa. Alfa Laval) werden die Folien einem praxisnahem Test unterzogen. Geprüft wird das Tiefziehverhalten der Folie bei einer Tiefziehtemperatur von 90°C. Die Heiz- und Tiefziehzeit beträgt 3 Sekunden. Die Muldengröße ist 184 mm x 114 mm (Breite x Länge), wobei die Ziehtiefe so lange um 5 mm erhöht wird, bis die Folie beim Tiefziehvorgang reißt. Es wird die Tiefe protokolliert, bei der die Folie nicht reißt.

| Muster | Trübung % | Glanz 20° % | Knickbruch Löcher | Tiefziehversuche max. Tiefzug mm |
|---|---|---|---|---|
| Vergleichsmuster 1 | 14,1 | 86 | 4 | 80 |
| Muster 2 | 6,4 | 125 | 1 | 80 |
| Muster 3 | 5,6 | 128 | 1 | 85 |
| Muster 4 | 6,1 | 116 | 0 | 90 |

Zusammenstellung der Meßergebnisse

## Patentansprüche

1. Polymere Mischung dadurch gekennzeichnet, daß sie
- 50 bis 99 Gew.-% Polyamid und
- 1 bis 50 Gew.-% Polyesteramid
enthält.

2. Polymere Mischung nach Anspruch 1, dadurch gekennzeichnet, daß das Polyamid eine Mischung aus mehreren Polyamiden ist.

3. Polymere Mischung nach Anspruch 1 und 2, dadurch gekennzeichnet, daß das Polyesteramid eine Mischung aus mehreren Polyesteramiden ist.

4. Verwendung von polymeren Mischungen gemäß einem der Ansprüche 1 bis 3 zur Herstellung von Folien.
